# EUROPÄISCHE PATENTSCHRIFT

(11) **EP 2 479 443 B1**
(45) Veröffentlichungstag und Bekanntmachung des Hinweises auf die Patenterteilung: **07.10.2015**
(21) Anmeldenummer: 12001980.7
(22) Anmeldetag: 18.06.2010
(51) Int. Cl.: F16B 45/02

(54) **Karabinervorrichtung**
Karabiner
Dispositif de mousqueton

(43) Veröffentlichungstag der Anmeldung: 25.07.2012
(62) Teilanmeldung aus: 10166580.0
(73) Patentinhaber: SKYLOTEC GmbH, 56567 Neuwied (DE)
(72) Erfinder: Meindl, Edwin, 9900 Lienz (AT); Schwingshackl, Ulrich, 39057 Eppan a.d. Weinstrasse (IT); Almberger, Günther, 83101 Rohrdorf (DE); Baumgartner, Christoph, 39031 Bruneck (IT)
(74) Vertreter: Zeitler Volpert Kandlbinder Patent- und Rechtsanwälte Partnerschaft mbB

(56) Entgegenhaltungen:
- EP-A1- 0 730 102
- GB-A- 1 527 238

## Beschreibung

### Technisches Gebiet

Die vorliegende Erfindung betrifft eine Karabinervorrichtung und ein Verfahren zum Betätigen einer Karabinervorrichtung.

### Hintergrund der Erfindung

Unter einem Karabiner bzw. einem Karabinerhaken kann ein Haken mit einem Schnappverschluss verstanden werden, wobei über den Schnappverschluss ein Element, wie beispielsweise ein Kletterseil, eingehängt werden kann, so dass der Karabiner in einer geschlossenen Stellung das eingebrachte Element umschließt. Ein Karabiner kann beispielsweise beim Klettern verwendet werden, um einen Kletterer mit einem Seil zu verbinden. Ein normaler Schnappkarabiner kann dabei schnell geöffnet und geschlossen werden, um das Seil schnell in den Karabiner einzubringen.

Ferner sind Karabiner mit einer Verschlusssicherung bekannt, bei welchen Sicherungselemente den Schnapper bzw. den Schwenkarm vor einem ungewollten Öffnen des Karabiners schützen. Als Sicherungselemente sind beispielsweise in einem sogenannten Verschlusskarabiner verschiebbare Hülsen bekannt, welche in einem geschlossenen Zustand über die Verbindungsstelle zwischen Schnapper und Karabinerkörper geschoben werden. Somit wird Öffnen des Schnappers verhindert.

Zudem sind Schraubkarabiner bekannt, bei welchen das Sicherungselement eine Verschlusshülse mit einem Gewinde ist. Die Verschlusshülse wird über ein entsprechendes Gewinde am Karabinerkörper geschraubt, so dass ein ungewolltes Verschieben der Verschlusshülse verhindert wird.

Darüber hinaus sind sogenannte Twist-Lock-Karabiner bekannt, bei welchen die Verschlusshülse so lang ist, dass sie auch im offenen Zustand über die Verbindungsstelle zwischen Schnapper und Körper reicht. Mittels einer Aussparung in der Verschlusshülse kann das Öffnen dennoch ermöglicht werden, indem die Verschlusshülse um den Schnapper gedreht wird, bis die Aussparung so ausgerichtet ist, dass der Schnapper geöffnet werden kann.

Ferner sind HMS-Karabiner bekannt. HMS-Karabiner sind eine spezielle Art eines Verschlusskarabiners, wobei die HMS-Karabiner eine spezielle, birnenähnliche Form aufweisen, um eine bessere Seilführung zu ermöglichen.

DE 200 01 280 U1 offenbart einen Karabiner, welcher einen Karabinerhaken mit einem über einen Gelenkbolzen verbundenen Schnapper aufweist. Zur Sicherung wirkt eine Feder auf den Schnapper, so dass der Schnapper ohne Ausübung einer Betätigungskraft in einer Schließstellung verharrt.

Aus der GB 1 527 238 ist ein Karabiner bekannt, bei dem ein Sicherungshebel drehbar an dem freien Ende des Schwenkarms befestigt ist. In der geschlossenen Stellung des Schwenkarms verschwenkt der Sicherungshebel automatisch aufgrund der Belastung durch ein Federelement in den Innenbereich des Karabiners und liegt dort an einem von dem hakenförmigen Grundkörper des Karabiners ausgebildeten Vorsprung an. Dadurch blockiert der Sicherungshebel ein Verschwenken des Schwenkarms und folglich ein Öffnen des Karabiners. Zum Öffnen des Karabiners muss daher vor dem Schwenken des Schwenkhebels der Sicherungshebel in Richtung des Schwenkhebels verschwenkt werden.

### Darstellung der Erfindung

Es ist eine Aufgabe der vorliegenden Erfindung, einen Karabiner mit einer einfach zu bedienenden Öffnungssicherung bereitzustellen.

Die Aufgabe wird mit einer Karabinervorrichtung und mit einem Verfahren zum Betätigen einer Karabinervorrichtung gemäß den unabhängigen Patentansprüchen gelöst.

Gemäß eines ersten Aspekts der vorliegenden Erfindung wird eine Karabinervorrichtung geschaffen. Die Karabinervorrichtung weist ein gebogenes Profilelement und einen Schwenkarm mit einem schwenkbar an dem Schwenkarm angeordneten Sicherungshebel auf. Der Schwenkarm ist an dem gebogenen Profilelement derart schwenkbar angeordnet, dass der Schwenkarm in eine Schließstellung zum Bereitstellen eines geschlossenen Profils der Karabinervorrichtung und in eine Öffnungsstellung zum Bereitstellen eines offenen Profils der Karabinervorrichtung schwenkbar ist. Der Sicherungshebel ist derart eingerichtet, dass der Sicherungshebel in der Schließstellung mit dem gebogenen Profilelement koppelbar ist. Der Sicherungshebel ist ferner derart eingerichtet, dass aufgrund einer auf den Sicherungshebel ausgeübten Betätigungskraft der Sicherungshebel von dem gebogenen Profilelement lösbar ist und der Schwenkarm in die Öffnungsstellung schwenkbar ist.

Gemäß eines weiteren Aspekts der vorliegenden Erfindung wird ein Verfahren zum Betätigen einer Karabinervorrichtung mit einem gebogenen Profilelement und mit einem an dem gebogenen Profilelement schwenkbar angebrachten Schwenkarm beansprucht. Das Verfahren weist zunächst ein Schwenken des Schwenkarms in eine Schließstellung zum Bereitstellen eines geschlossenen Profils der Karabinervorrichtung und ein Schwenken in eine Öffnungsstellung zum Bereitstellen eines offenen Profils der Karabinervorrichtung auf. Ferner weist das Verfahren ein Verhaken eines an dem Schwenkarm schwenkbar angeordneten Sicherungshebels mit dem gebogenen Profilelement in der Schließstellung auf. Ferner kann gemäß dem Verfahren der Sicherungshebel mittels Ausübens einer Betätigungskraft auf den Sicherungshebel derart geschwenkt werden, dass sich der Sicherungshebel von dem gebogenen Profilelement löst und der Schwenkarm in die Öffnungsstellung schwenkbar ist.

Erfindungsgemäß weist die Karabinervorrichtung ein Federelement auf. Der Sicherungshebel weist einen Sicherungsbereich auf. In der Schließstellung ist der Sicherungshebel mit dem Sicherungsbereich mit dem gebogenen Profilelement koppelbar. Das Federelement ist mit dem Schwenkarm und dem Sicherungshebel derart gekoppelt, dass der Sicherungshebel mit dem Sicherungsbereich aufgrund einer Federkraft des Federelements in Richtung zu dem gebogenen Profil schwenkbar ist. Durch die Federkraft des Federelements nimmt der Sicherungshebel somit eine Sicherungsstellung ein, insbesondere wenn keine Betätigungskraft ausgeübt wird. Die Sicherungsstellung entspricht derjenigen Stellung des Sicherungshebels, in welcher der Sicherungshebel beispielsweise in der Schließstellung mit dem gebogenen Profilelement gekoppelt ist. Der Sicherungshebel nimmt durch die Federkraft die Sicherungsstellung auch außerhalb der Schließstellung des Schwenkarms ein. Mittels des Federelements wird eine zusätzliche Sicherung bereitgestellt, da ein ungewolltes Lösen des Sicherungshebels von dem gebogenen Profilelement verhindert wird.

Unter dem Begriff "gebogenes Profilelement" wird der Grundkörper der Karabinervorrichtung bzw. der Karabinerhaken ohne den Schwenkarm definiert. Das gebogene Profilelement weist ein offenes Profil mit einer Öffnung auf, durch welche Öffnung die Karabinervorrichtung an ein beliebiges Element, wie beispielsweise an ein Seil, hinaufsteckbar ist. Das gebogene Profilelement kann beispielsweise trapezförmig ausgebildet sein, wobei ein Schenkel des Trapezes fehlt und darin die Öffnung bereitstellbar ist. Ferner kann das gebogene Profilelement die Form eines Rings mit einem Spalt aufweisen. Ferner kann das gebogene Profilelement ovale Formen mit einem Spalt als Öffnung aufweisen. Ebenso kann das gebogene Profilelement ein Vieleck aufweisen, wobei zumindest eine Seite dieses Vielecks die Öffnung der Karabinervorrichtung darstellt. Das gebogene Profilelement kann die Form eines gebogenen Stabes aufweisen, wobei die Querschnittsform eine Kreisform, eine ovale Form, oder ein Vieleck aufweisen kann. Zur besseren Bedienung kann das gebogene Profilelement eine runde Oberflächenform mit beispielsweise abgeflachten Bereichen aufweisen.

Unter dem Begriff "Schwenkarm" ist ein starres, nicht verbiegbares Stabelement definiert, welches die Öffnung des gebogenen Profilelements wahlweise schließt. Dabei kann der Schwenkarm an einem Randbereich des gebogenen Profilelements, welcher zur Öffnung hin ausgerichtet ist, schwenkbar, beispielsweise mit einem Lagerbolzen, befestigt werden. An der gegenüberliegenden Seite des Schwenkarms kann der Schwenkarm mit einem weiteren, zur Öffnung hin ausgerichteten Bereich des gebogenen Profilelements in Kontakt stehen, um die Öffnung zu schließen.

Diejenige Schwenkposition des Schwenkarms, welche es ermöglicht, einen Gegenstand, wie beispielsweise ein Seil, durch die Öffnung in einen Innenbereich des gebogenen Profilelements einzubringen, wird als Öffnungsstellung definiert.

Diejenige Stellung des Schwenkarms, welche die Öffnung des gebogenen Profilelements schließt und ein Einbringen weiterer Elemente in den Innenbereich des gebogenen Profilelements verhindert, wird als Schließstellung definiert.

Unter dem Begriff "Sicherungshebel" wird ein Sicherungselement definiert, welches ein ungewolltes Schwenken des Schwenkarms von der Schließstellung in die Öffnungsstellung verhindert. Der Sicherungshebel ist hierfür insbesondere schwenkbar an dem Schwenkarm angebracht. Die schwenkbare Lagerung des Sicherungshebels an dem Schwenkarm kann beispielsweise über einen Lagerbolzen bereitgestellt werden. Mit einem Bereich des Sicherungshebels, insbesondere mit einem Endbereich des Sicherungshebels, ist der Sicherungshebel mit dem gebogenen Profilelement koppelbar. Der Begriff "koppelbar" bedeutet, dass der Sicherungshebel mit dem gebogenen Profilelement derart verbindbar ist, dass aufgrund der Kopplung des Sicherungshebels mit dem gebogenen Profilelement ein Verschwenken des Schwenkarms nicht möglich ist. Mit anderen Worten kann der Schwenkarm nicht bewegt, insbesondere nicht geschwenkt, werden, solange der Sicherungshebel mit dem gebogenen Profilelement gekoppelt ist. Zum Lösen der Kopplung zwischen dem gebogenen Profilelement und dem Sicherungshebel ist es notwendig, eine Betätigungskraft (Zug- oder Druckkraft) auf den Sicherungshebel auszuüben, so dass der Sicherungshebel geschwenkt wird und keine Kopplung zwischen dem Sicherungshebel und dem gebogenen Profilelement mehr besteht. Erst in dieser entkoppelten Stellung zwischen Sicherungshebel und gebogenem Profilelement ist ein Schwenken des Schwenkarms möglich, so dass der Schwenkarm in die Öffnungsstellung geschwenkt werden kann.

Mit anderen Worten reicht zum Entkoppeln und somit zum Entsichern des Sicherungshebels mit dem gebogenen Profilelement ein einfaches Verschwenken des Sicherungshebels aus. Ein entlang der Längsrichtung des Schwenkarms ausgeübtes Verschieben eines Sicherungselements oder eines Verschraubens eines Sicherungselements, wie beispielsweise einer Hülse bzw. Schraubhülse, ist nicht notwendig.

Mit der vorliegenden Erfindung wird eine sichere, aber dennoch einfach zu bedienende Karabinervorrichtung geschaffen. Zum Öffnen der Karabinervorrichtung reicht es aus, den Sicherungshebel zu schwenken. Ein Schwenken des Sicherungshebels kann in einfacher Art und Weise durch eine Zug- oder Druckkraft ermöglicht werden. Aus ergonomischen Gesichtspunkten ist dies deutlich einfacher zu Bedienen als ein Verschieben von Sicherungshülsen entlang dem Schwenkarm.

Gemäß eines weiteren Aspekts der Karabinervorrichtung ist die Betätigungskraft insbesondere eine Druckkraft. Dies führt zu einer deutlich besseren und einfacheren Bedienung der Karabinervorrichtung. Da der Benutzer zum Entriegeln des Sicherungshebels einfach eine Druckkraft aufbringen muss, hat er durch das Ausüben dieser Druckkraft gleichzeitig den Schwenkarm bereits sicher, beispielsweise zwischen seinen Fingern, eingeklemmt. Der Bewegungsablauf "Drücken zum Entriegeln des Sicherungshebels und Drücken oder Schieben des Schwenkarms" in eine Öffnungsstellung ist deutlich einfacher auszuführen als der Bewegungsablauf "Schieben einer Sicherungshülse entlang des Schwenkarms und Drücken des Schwenkarms zum Schwenken des Schwenkarms" in eine Öffnungsstellung.

Gemäß einer weiteren beispielhaften Ausführungsform ist der Schwenkarm zum Schwenken von der Schließstellung in die Öffnungsstellung in Richtung eines von dem gebogenen Profilelement zumindest teilweise geschlossenen Innenbereichs schwenkbar.

Als "Innenbereich" wird derjenige Bereich definiert, welcher von dem gebogenen Profilelement und dem Schwenkarm in Schließstellung umschlossen wird. In dem Innenbereich liegen in der Schließstellung beispielsweise die Seile oder anderen Elemente, an welchen die Karabinervorrichtung befestigt werden soll.

Durch das Schwenken des Schwenkarms in Richtung des Innenbereichs wird eine Öffnungsstellung geschaffen, bei welcher die innen liegenden Elemente manuell über den Schwenkarm geschoben werden, um aus dem Innenbereich der Karabinervorrichtung herausbefördert zu werden. In dem Fall, dass der Schwenkarm in Richtung eines Außenbereichs der Karabinervorrichtung schwenkbar ausgebildet ist, wird ein Herausbefördern der innen liegenden zu sichernden Elemente zwar erleichtert, doch können diese selbsttätig und somit ungewollt sich aus der Karabinervorrichtung herauslösen. Ferner besteht die Gefahr, dass in dem Falle, dass sich der Schwenkarm in Richtung eines Außenbereichs öffnet, ein Verhaken des nach außen geöffneten Schwenkarms auftritt. So kann sich beispielsweise ein vorbeirutschendes Seil oder ein Kleidungsstück eines Benutzers mit dem Schwenkarm ungewollt verhaken, so dass die Bedienung der Karabinervorrichtung gestört wird. Gerade in Gefahrensituationen kann ein ungewolltes Verhaken der Karabinervorrichtung zu riskanten Situationen führen.

Gemäß einer weiteren beispielhaften Ausführungsform weist das gebogene Profilelement eine Profilmittellinie auf, welche in einer Profilebene verläuft. Der Schwenkarm ist um eine erste Drehachse schwenkbar, wobei die erste Drehachse parallel zu einem Normalenvektor der Profilebene ausgebildet ist.

Der Begriff "Profilmittellinie" definiert eine Linie, welche zumindest teilweise in dem gebogenen Profilelement liegt. Die Profilmittellinie kann beispielsweise durch die Mittelpunkte der Querschnitte des gebogenen Profilelements verlaufen. Dennoch können weitere Bereiche des gebogenen Profilelements derart ausgebildet sein, dass die Profilmittellinie zumindest teilweise nicht durch diese Bereiche des gebogenen Profilelements verlaufen.

Die Profilebene bildet insbesondere eine planare Profilebene aus, in welcher die Profilmittellinie verläuft. Dementsprechend liegt das gebogene Profilelement größtenteils ebenfalls in der Profilebene. Dennoch können einzelne Bereiche des gebogenen Profilelements in ihrem Verlauf die Profilebene verlassen, beispielsweise um einen Seilführungsbereich oder einen Griffbereich zu bilden.

Die erste Drehachse definiert die Drehachse des Schwenkarms. Die Drehachse kann beispielsweise durch einen Bolzen oder Drehpin des Schwenkarms definiert werden. Liegt die erste Drehachse parallel zu dem Normalenvektor der Profilebene, so kann der Schwenkarm innerhalb des Profilelements geschwenkt werden. Der Schwenkarm ist somit in Richtung des Innenbereichs von der Schließstellung in die Öffnungsstellung schwenkbar, ohne die Profilebene zu verlassen.

Erfindungsgemäß ist der Sicherungshebel um die zweite Drehachse schwenkbar, wobei die erste Drehachse und die zweite Drehachse einen Winkel zueinander aufweisen. Mit anderen Worten sind die erste Drehachse und die zweite Drehachse nicht parallel zueinander ausgebildet, sondern weisen unterschiedliche Raumlagen und Erstreckungsrichtungen bzw. Längsrichtungen auf. Mit anderen Worten kann der Sicherungshebel geschwenkt werden, indem beispielsweise eine Betätigungskraft in Richtung parallel zu dem Normalenvektor der Profilebene ausgeübt wird, wobei eine zweite weitere Betätigungskraft notwendig ist, um den entsicherten Schwenkarm zu schwenken. Die zweite Betätigungskraft muss entsprechend in einer anderen Richtung als die Richtung der ersten Betätigungskraft ausgeübt werden. Durch die Notwendigkeit des Entsicherns des Sicherungshebels in eine erste Richtung und des Schwenkens des Schwenkarms in eine zweite Richtung wird die Sicherheit der Karabinervorrichtung erhöht, da das Risiko eines ungewollten Öffnens des Schwenkarms reduziert wird. Wird beispielsweise ungewollt eine Betätigungskraft auf den Sicherungshebel ausgeübt, so bedarf es einer weiteren Betätigungskraft in der zweiten Richtung, um den Schwenkarm zu schwenken und eine Öffnungsstellung der Karabinervorrichtung bereitzustellen.

Der Winkel zwischen der ersten Drehachse und der zweiten Drehachse kann beispielsweise zwischen ungefähr 1° und ungefähr 90° definiert werden, insbesondere einen Winkel zwischen ungefähr 60° und 90°. In einer beispielhaften Ausführungsform sind die erste Drehachse und die zweite Drehachse im Wesentlichen orthogonal zueinander ausgebildet.

Gemäß einer weiteren beispielhaften Ausführungsform weist der Schwenkarm ein freies Ende mit einem Führungsprofil auf. Das Führungsprofil ist derart ausgebildet, dass in der Schließstellung das Führungsprofil einen Teilbereich des gebogenen Profilelements zumindest teilweise umschließt.

Das Führungsprofil kann beispielsweise aus einem Schlitz bestehen, welcher durch zwei Wandbereiche des Schwenkarms gebildet wird. Angepasst an das Führungsprofil kann der Teilbereich des gebogenen Profilelements beispielsweise einen verjüngten Bereich ausbilden, wobei der verjüngte Bereich beispielsweise einen Steg ausbildet. Der Steg kann derart ausgebildet sein, um in den Schlitz des Führungsprofils zu passen. Wird der Schwenkarm von der Öffnungsstellung in die Schließstellung geschwenkt, schiebt sich der Schlitz des Führungsprofils kurz vor dem Erreichen der Schließstellung auf den Steg des gebogenen Profilelements. In dem weiteren Verschwenken des Sicherungsarms wird dieser durch das Führungsprofil in seiner Schwenkbewegung geführt. In der Schließstellung steht das Führungsprofil mit dem Teilbereich des Profilelements in Eingriff.

Ein Lösen des Führungsprofils mit dem Teilbereich des gebogenen Profilelements ist dann nur möglich, indem der Schwenkarm in eine bestimmte Schwenkrichtung, beispielsweise entlang der Profilebene, geschwenkt wird. In alle anderen Richtungen besteht kein Freiheitsgrad. Somit kann durch das Führungsprofil, welches in Eingriff mit einem Teil des gebogenen Profilelements steht, eine robuste Karabinervorrichtung geschaffen werden, da sich das Führungsprofil und der Teilbereich des gebogenen Profilelements gegenseitig stützen.

Ebenso besteht eine beispielhafte Ausgestaltung darin, dass das Führungsprofil den Steg aufweist und der Teilbereich des gebogenen Profilelements den Schlitz, in welchen der Steg geführt werden kann, aufweist.

Gemäß einer weiteren beispielhaften Ausführungsform ist das Führungsprofil ein U-Profil mit einer offenen Profilseite. Die offene Profilseite ist derart angeordnet, dass während des Schwenkens des Schwenkarms in die Schließstellung der Teil des gebogenen Profilelements über die offene Profilseite in das U-Profil einschwenkbar ist. In der Schließstellung umschließt das U-förmige Führungsprofil den Steg des gebogenen Profilelements derart, dass alle Seiten des Stegs in Kontakt mit der Innenfläche des U-Profils stehen, bis auf die Seite der offenen Profilseite des Führungsprofils. Somit kann eine Stützkraft von dem Teil des gebogenen Profilelements auf das Führungsprofil von allen Richtungen übertragen werden, bis auf eine Kraft, welche in Richtung der offenen Profilseite wirkt. Damit wird eine robuste Karabinervorrichtung bereitgestellt, da belastende Kräfte, welche aus vielen unterschiedlichen Kraftrichtungen wirken, durch das Führungsprofil von dem Schwenkarm auf das gebogene Profilelement übertragen werden können.

Gemäß einer weiteren beispielhaften Ausführungsform weist der Sicherungshebel einen Sicherungshaken auf. Das gebogene Profilelement weist eine Sicherungsnut auf. Der Sicherungshaken und die Sicherungsnut sind derart zueinander ausgerichtet, dass in der Sicherungsstellung der Sicherungshaken zum Verhindern eines weiteren Schwenkens des Schwenkarms in die Sicherungsnut eingreift. Der Sicherungshaken besteht beispielsweise aus einer Erhebung an dem Sicherungshebel, wobei der Sicherungshaken in seiner Form an eine entsprechende Sicherungsnut an dem gebogenen Profilelement angepasst ist. In der Schließstellung ist der Sicherungshaken in die Sicherungsnut eingefahren, so dass eine Kraftübertragung zwischen dem Sicherungshaken und der Sicherungsnut bereitstellbar ist.

Eine relative Bewegung des Schwenkarms zu dem gebogenen Profilelement wird durch die Kopplung des Sicherungshakens mit der Sicherungsnut verhindert.

Ebenso besteht eine beispielhafte Ausgestaltung darin, dass das gebogene Profilelement den Sicherungshaken und der Sicherungshebel die Sicherungsnut aufweist.

Gemäß einer weiteren beispielhaften Ausführungsform weist der Schwenkarm einen schwenkbar an dem Schwenkarm angeordneten weiteren Sicherungshebel auf. Der weitere Sicherungshebel ist derart eingerichtet, dass der weitere Sicherungshebel in der Schließstellung mit dem gebogenen Profilelement koppelbar ist. Der weitere Sicherungshebel ist derart eingerichtet, dass aufgrund einer auf den weiteren Sicherungshebel ausgeübten Betätigungskraft der weitere Sicherungshebel von dem gebogenen Profilelement lösbar ist. Der weitere Sicherungshebel ist zum Sichern des geschlossenen Profils in der Schließstellung mit dem gebogenen Profilelement verhakt.

Der weitere Sicherungshebel kann dieselben beispielhaften und oben beschriebenen Ausgestaltungen wie der oben beschriebene Sicherungshebel aufweisen. Andererseits kann der weitere Sicherungshebel auch unterschiedliche Kombinationen von oben beschriebenen Ausgestaltungen wie der oben beschriebene Sicherungshebel aufweisen.

Mit dem Anbringen eines weiteren Sicherungshebels kann eine zusätzliche Sicherung gegenüber einem ungewollten Öffnen des Schwenkarms in die Öffnungsstellung erzielt werden. Der Benutzer muss beispielsweise neben der ersten Betätigungskraft zusätzlich eine weitere, zweite Betätigungskraft ausüben, um den Sicherungshebel und den weiteren Sicherungshebel von dem gebogenen Profilelement zu entkoppeln, so dass ein Schwenken des Schwenkarms von der Schließstellung in die Öffnungsstellung ermöglicht wird. Wird beispielsweise ungewollt eine Betätigungskraft auf den einen Sicherungshebel ausgeübt, so sichert der weitere Sicherungshebel dennoch den Schwenkarm vor einem ungewollten Schwenken.

Der Sicherungshebel und der weitere Sicherungshebel können jeweils über einen ersten Drehzapfen und einen zweiten Drehzapfen mit dem Schwenkarm drehbar gekoppelt werden, wobei der erste Drehzapfen und der zweite Drehzapfen jeweils eine Drehachse aufweisen, wobei die Drehachsen parallel zueinander verlaufen. Ebenfalls können die Drehachsen des Sicherungshebels und die Drehachse des weiteren Sicherungshebels in einer beispielhaften Ausgestaltung einen Winkel zueinander aufweisen.

Gemäß einer weiteren beispielhaften Ausführungsform ist der weitere Sicherungshebel unabhängig von dem Sicherungshebel betätigbar und sozusagen entkoppelt voneinander. Durch eine Entkopplung wird das Risiko eines ungewollten Öffnens der Karabinervorrichtung reduziert. Reibt beispielsweise das Seil über einen der Sicherungshebel, so kann dieser Sicherungshebel geöffnet werden. Allerdings kann der andere Sicherungshebel weiter mit dem gebogenen Profilelement in Eingriff stehen, sodass der Schwenkarm weiter in der Schließstellung verharrt, womit ein ungewolltes Öffnen der Karabinervorrichtung verhindert wird.

In einer anderen weiteren beispielhaften Ausführungsform können der Sicherungshebel und der weitere Sicherungshebel derart gekoppelt sein, dass durch Betätigung eines der Sicherungshebel der andere Sicherungshebel automatisch ebenfalls betätigt wird. Dies erleichtert eine Bedienung der Karabinervorrichtung, da an verschiedenen Stellen der Karabinervorrichtung eine Betätigungskraft ausgeübt werden kann, um den Schwenkarm zu entsichern, sodass dieser von der Schließstellung in die Öffnungsstellung schwenkbar ist.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine perspektivische Darstellung einer Karabinervorrichtung in Schließstellung gemäß einer beispielhaften Ausführungsform der Erfindung;
Fig. 2 eine schematische Darstellung einer Karabinervorrichtung in Schließstellung gemäß einer beispielhaften Ausführungsform der vorliegenden Erfindung;
Fig. 3 eine schematische Darstellung zweier Sicherungshebel gemäß einer beispielhaften Ausführungsform der vorliegenden Erfindung;
Fig. 4 eine Schnittdarstellung des Schnitts B-B aus Fig. 2;
Fig. 5 eine perspektivische Darstellung einer Karabinervorrichtung in Öffnungsstellung gemäß einer beispielhaften Ausführungsform der vorliegenden Erfindung;
Fig. 6 eine schematische Darstellung einer Draufsicht auf eine Karabinervorrichtung in Schließstellung gemäß einer beispielhaften Ausführungsform der vorliegenden Erfindung; und
Fig. 7 eine schematische Darstellung einer Draufsicht einer Karabinervorrichtung in einer entriegelten Stellung gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

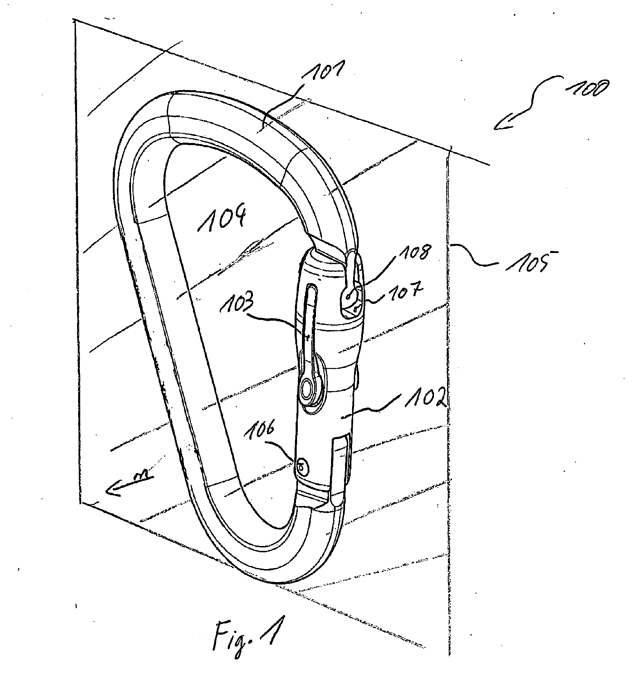

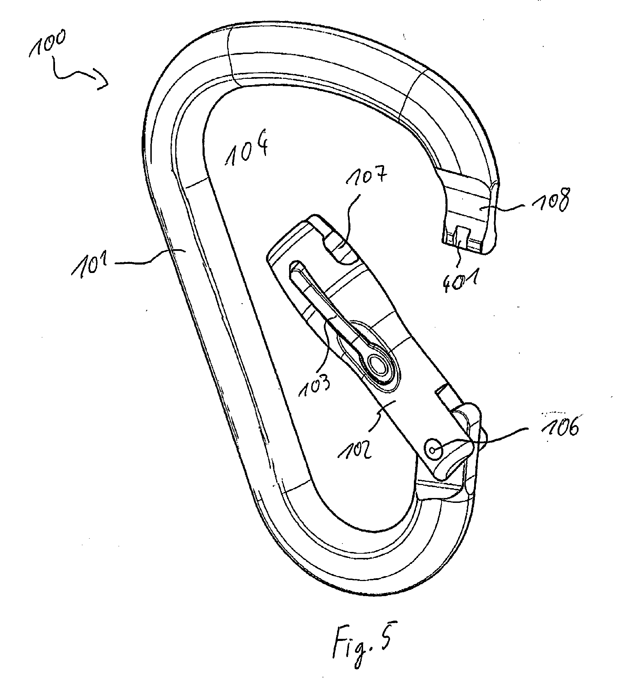

Fig. 1 zeigt eine perspektivische Darstellung einer Karabinervorrichtung 100 gemäß einer beispielhaften Ausführungsform der vorliegenden Erfindung. Die Karabinervorrichtung 100 weist ein gebogenes Profilelement 101 und einen Schwenkarm 102 mit einem schwenkbar an dem Schwenkarm 102 angeordneten Sicherungshebel 103 auf. Der Schwenkarm 102 ist an dem gebogenen Profilelement 101 derart schwenkbar angeordnet, dass der Schwenkarm 102 in eine Schließstellung zum Bereitstellen eines geschlossenen Profils der Karabinervorrichtung 100 und in eine Öffnungsstellung zum Bereitstellen eines offenen Profils der Karabinervorrichtung 100 schwenkbar ist. In Fig. 1 ist die Schließstellung dargestellt und in Fig. 5 beispielsweise die Öffnungsstellung.

Der Sicherungshebel 103 ist derart eingerichtet, dass der Sicherungshebel 103 in der Schließstellung mit dem gebogenen Profilelement 101 koppelbar ist. Der Sicherungshebel 103 ist derart eingerichtet, dass aufgrund einer auf dem Sicherungshebel 103 ausgeübten Betätigungskraft der Sicherungshebel 103 von dem gebogenen Profilelement 101 lösbar ist und der Schwenkarm 102 in die Öffnungsstellung schwenkbar ist.

Der Sicherungshebel 103 ist schwenkbar ausgeführt, so dass der Sicherungshebel 103 durch einfaches Verschwenken von einer mit dem gebogenen Profilelement 101 gekoppelten Stellung in eine entkoppelte Stellung geschwenkt werden kann. Insbesondere kann zum Auslösen des Entkoppelns eine Betätigungskraft, beispielsweise eine Druckkraft, auf den Sicherungshebel 103 übertragen werden. Eine solche Betätigungskraft, welche zu einem Schwenken des Sicherungshebels 103 führt, ist in ergonomisch einfacher Art und Weise aufzubringen, anders als beispielsweise längs verschiebbare Hülsen oder gar verschraubbare Sicherungshülsen.

In der beispielhaften Ausführungsform in Fig. 1 ist das gebogene Profilelement 101 nahezu geschlossen, wobei eine Seite des gebogenen Profilelements 101 eine Öffnung aufweist. Durch die Öffnung kann die Karabinervorrichtung 100 an ein beliebiges Sicherungselement, wie beispielsweise an ein Seil, befestigt werden. Durch die Öffnung wird das Sicherungselement von einem Außenbereich in einen Innenbereich 104 der Karabinervorrichtung 100 eingebracht. Die Öffnung wird mit dem Schwenkarm 102 geschlossen, so dass das in dem Innenbereich 104 liegende Sicherungselement nicht mehr von der Karabinervorrichtung 100 entnommen werden kann.

Der Schwenkarm 102 ist um eine erste Drehachse 106 schwenkbar mit dem gebogenen Profilelement 101 verbunden. Der Schwenkarm 102 ist um die Drehachse 106 in eine Öffnungsstellung schwenkbar, so dass das Sicherungselement von außen in den Innenbereich 104 eingebracht werden kann. Ebenso ist der Schwenkarm 102 um die erste Drehachse 106 in die in Fig. 1 dargestellte Schließstellung schwenkbar, so dass ein im Innenbereich 104 liegendes Sicherungselement in der Karabinervorrichtung 100 gesichert ist.

Das gebogene Profilelement 101 und der Schwenkarm 102 liegen in der beispielhaften Ausführungsform von Fig. 1 in einer Profilebene 105. Die Profilebene 105 ist derart definiert, dass die Profilebene 105 die Mittellinie des gebogenen Profilelements 101 und/oder des Schwenkarms 102 aufweist. Von der Profilebene 105 erstreckt sich der Normalenvektor n.

In der beispielhaften Ausführungsform von Fig. 1 wird die erste Drehachse 106 parallel zu dem Normalenvektor n ausgebildet. In dieser Ausführungsform ist der Schwenkarm 102 innerhalb der Profilebene 105 schwenkbar mit dem gebogenen Profilelement 101 gekoppelt. In einer weiteren Ausführungsform lässt sich der Schwenkarm 102 insbesondere in Richtung des Innenbereichs 104 von der Schließstellung in die Öffnungsstellung schwenken.

Ferner zeigt das Ausführungsbeispiel von Fig. 1 einen Sicherungshebel 103, welcher mit dem Schwenkarm 102 schwenkbar verbunden ist. Auf dem Sicherungshebel 103 kann eine Betätigungskraft ausgeübt werden, so dass sich der Sicherungshebel 103 mit seinem Sicherungsbereich von dem gebogenen Profilelement 101 fortbewegt und sich von dem gebogenen Profilelement 101 entkoppelt. Durch Aufbringen einer weiteren Betätigungskraft auf den Schwenkarm 102 ist dieser innerhalb der Profilebene 105 von der Schließstellung in die Öffnungsstellung schwenkbar.

Um eine robustere Ausgestaltung der Karabinervorrichtung 100 bereitzustellen, weist der Schwenkarm 102 ein Führungsprofil 107 auf, welcher einen Teilbereich 108 des gebogenen Profilelements 101 umschließt. Der Teilbereich 108 des gebogenen Profilelements 101 weist beispielsweise einen Steg auf, welcher in eine in dem Führungsprofil 107 liegende Nut mittels Schwenkens des Schwenkarms 102 einfahrbar ist. In der Schließstellung können Kräfte aus verschiedenen Richtungen von dem Teilbereich 108 auf das Führungsprofil 107 und umgekehrt übertragen werden. Das Führungsprofil 107 und der Teilbereich 108 des gebogenen Profilelements 101 können ausschließlich in Schwenkrichtung des Schwenkarms 102 entkoppelt werden. Jegliche andere Kraftübertragungen und Bewegungen werden übertragen, so dass eine robuste Karabinervorrichtung 100 bereitgestellt ist.

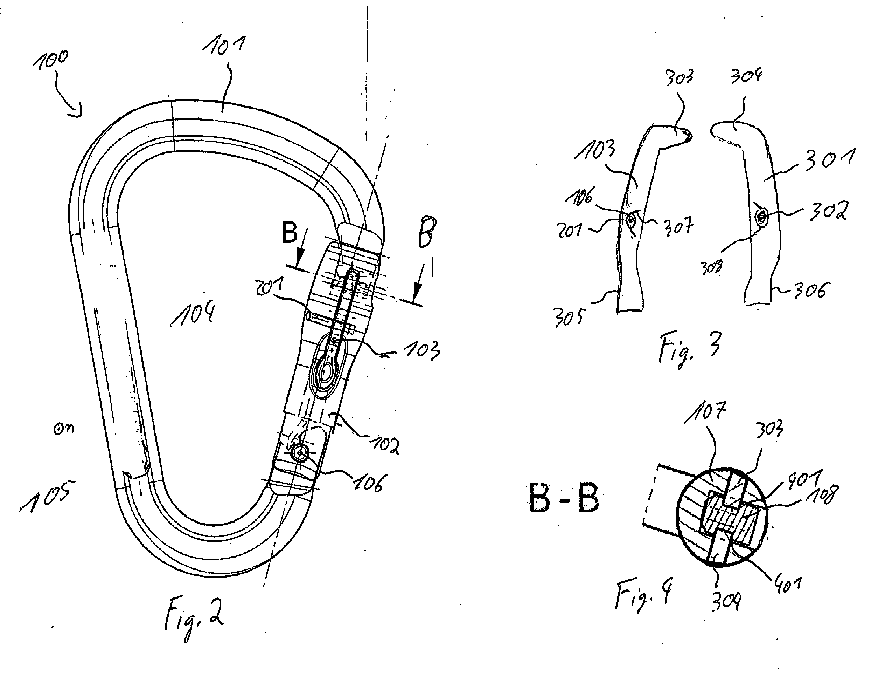

Fig. 2 zeigt eine Seitenansicht der Karabinervorrichtung 100 gemäß einer beispielhaften Ausführungsform. Die Karabinervorrichtung 100 weist das gebogene Profilelement 101 auf, wobei die Karabinervorrichtung 100 eine Öffnung aufweist, die durch den Schwenkarm 102 in der Schließstellung geschlossen ist. Der Schwenkarm 102 ist schwenkbar um die erste Drehachse 106 mit dem gebogenen Profilelement 101 gekoppelt. Das gebogene Profilelement 101 bildet zusammen mit dem Schwenkarm 102 in der Schließstellung den Innenbereich 104 aus, in welchem das Sicherungselement durch die Karabinervorrichtung 100 eingeschlossen werden kann.

In der Zeichenebene bildet sich die Profilebene 105 aus, welche durch den Normalenvektor n definiert wird. Das gebogene Profilelement 101 und der Schwenkarm 102 befinden sich mit ihren Mittellinien zumindest teilweise in der Profilebene 105. Die erste Drehachse 106 ist parallel zu dem Normalenvektor n ausgebildet. Der Schwenkarm 102 ist daher drehbar bzw. schwenkbar innerhalb der Profilebene 105 eingerichtet.

Ferner zeigt Fig. 2 eine zweite Drehachse 201, um welche der Sicherungshebel 103 schwenkbar ist. Die zweite Drehachse 201 ist ungefähr orthogonal zu dem Normalenvektor n ausgerichtet.

Um den Schwenkarm 102 von der Schließstellung in die Öffnungsstellung zu schwenken, muss eine Betätigungskraft auf den Sicherungshebel 103 aufgebracht werden, um den Sicherungshebel 103 von dem gebogenen Profilelement 101 zu entkoppeln. Der Sicherungshebel 103 ist mit einem Sicherungsbereich mit dem gebogenen Profilelement 101 gekoppelt. Die Betätigungskraft kann an einem Bereich des Sicherungshebels 103 aufgebracht werden, welcher sich an einem zu dem Sicherungsbereich gegenüberliegenden Endbereich des Sicherungshebels 103 befindet. Ein Aufbringen der Betätigungskraft schwenkt den Sicherungshebel 103 um die zweite Drehachse 201 in eine von dem gebogenen Profilelement 101 entkoppelte Position, so dass durch Aufbringen einer weiteren Betätigungskraft der Schwenkarm 102 um die erste Drehachse 106 in eine geöffnete Stellung geschwenkt werden kann. Die Schwenkrichtung des Schwenkarms 102 von der Schließstellung in die Öffnungsstellung kann beispielsweise in Richtung des Innenbereichs 104 oder entgegen der Richtung des Innenbereichs 104 definiert werden.

Fig. 3 zeigt beispielhafte Ausführungsformen des Sicherungshebels 103 und eines weiteren Sicherungshebels 301. Der weitere Sicherungshebel 301 kann zusätzlich an dem Schwenkarm 102 schwenkbar angebracht werden, um das Risiko eines ungewollten Schwenkens des Schwenkarms 102 zu reduzieren.

Jeder der Sicherungshebel 103, 301 weist beispielsweise einen Sicherungshaken 303 bzw. einen weiteren Sicherungshaken 304 auf. Jeder der Sicherungshaken 303, 304 kann beispielsweise in Schließstellung mit einer entsprechenden Sicherungsnut 401 gekoppelt werden (siehe Fig. 4). Der weitere Sicherungshebel 301 kann über eine weitere zweite Drehachse 302 mit dem Schwenkarm 102 gekoppelt werden. An gegenüberliegenden Enden zu den Sicherungshaken 303, 304 kann jeder der Sicherungshebel 101, 301 eine Betätigungsfläche 305, bzw. eine weitere Betätigungsfläche 306 aufweisen. Mittels Aufbringens einer Betätigungskraft schwenken die Sicherungshebel 103, 301 um die zweiten Drehachsen 201, 302 derart, dass sich die Sicherungshaken 303, 304 von dem gebogenen Profilelement 101 entfernen und die Sicherungshebel 103, 301 entkoppelt sind. Um die Sicherheit eines ungewollten Entkoppelns der Sicherungshebel 103, 301 zu reduzieren, können um die zweite Drehachse 201 ein Federelement 307 und um die weitere zweite Drehachse 302 ein weiteres Federelement 308 angebracht werden. Die Federelemente 307, 308 können beispielsweise Drehfedern sein. Die Federelemente 307, 308 können derart vorgespannt sein, dass deren Federkräfte ohne Aufbringen einer Betätigungskraft eine Drehung der Sicherungshebel 103, 301 in die Richtung erzeugen, in welche sich die Sicherungshaken 303, 304 auf das gebogene Profilelement 101 hinzubewegen bzw. hinzuschwenken. Damit kann das Risiko verringert werden, dass sich die Sicherungshebel 103, 301 ungewollt von dem gebogenen Profilelement 101 entkoppeln.

Der Sicherungshebel 103 und der weitere Sicherungshebel 301 können ferner unabhängig voneinander betätigbar sein. Falls ein Sicherungshebel 103, 301 ungewollt gelöst wird, bleibt der andere davon unberührt und verharrt in der Schließstellung.

Fig. 4 zeigt den Schnitt B-B aus Fig. 2. An einem Endbereich des Schwenkarms 102 wird das Führungsprofil 107 ausgebildet. Das Führungsprofil 107 weist im Querschnitt ein U-Profil mit einer offenen Seite und drei Wandbereichen auf. Das Führungsprofil 107 umschließt den Teilbereich 108 des gebogenen Profilelements 101. Der Teilbereich 108 des gebogenen Profilelements 101 ist mit anderen Worten innerhalb des Führungsprofils 107 geführt. Über die offene Seite des Führungsprofils 107 kann der Schwenkarm 102 von der Schließstellung in die Öffnungsstellung geschwenkt werden. In dem Teilbereich 108 des gebogenen Profilelements 101 sind die Sicherungsnuten 401 ausgebildet. In die Sicherungsnuten 401 kann in Schließstellung der Sicherungshaken 303 des Sicherungshebels 103 eingreifen sowie der weitere Sicherungshaken 304 des weiteren Sicherungshebels 301. Die Kopplung der Sicherungshaken 303, 304 in einer jeweiligen Sicherungsnut 401 des gebogenen Profilelements 101 verhindert ein Verschwenken des Schwenkarms 102 in Richtung der offenen Seite des Führungsprofils 107.

Erst ein Schwenken der Sicherungshebel 103, 301 um die zweiten Drehachsen 201, 302 führen dazu, dass sich die Sicherungshaken 303, 304 von dem Teilbereich 108 des gebogenen Profilelements 101 lösen, so dass ein Schwenken des Schwenkarms 102 ermöglicht wird.

Fig. 5 zeigt eine perspektivische Darstellung einer beispielhaften Ausführungsform der Karabinervorrichtung 100 in Öffnungsstellung. Das gebogene Profilelement 101 stellt die Öffnung bereit, durch welche Sicherungselemente in den Innenbereich 104 eingebracht werden können. Zur Erlangung der Öffnungsstellung wird der Schwenkarm 102 um die erste Drehachse 106 in Richtung Innenbereich 104 geschwenkt. Hierzu ist vorab eine Betätigungskraft auf den Sicherungshebel 103 aufgebracht worden, so dass sich Eingriffselemente, wie beispielsweise die Sicherungshaken 303, 304 (siehe Fig. 3) von der Sicherungsnut 401 von dem Teilbereich 108 des gebogenen Profilelements 101 entkoppelt haben. Ferner weist der Schwenkarm 102 das Führungsprofil 107 auf, welches einen entsprechend geformten Teilbereich 108 des gebogenen Profilelements 101 in der Schließstellung umschließen kann. Wird der Schwenkarm 102 zurück in die Schließstellung geschwenkt, umschließt das Führungsprofil 107 kurz vor Erreichen der Schließstellung den Teilbereich 108 des gebogenen Profilelements 101, so dass der Schwenkarm 102 bis zur Erlangung der Schließstellung von dem Teilbereich 108 des gebogenen Profilelements 101 geführt wird. In Schließstellung ermöglicht das Führungsprofil 107 und der Teilbereich 108 des gebogenen Profilelements 101 eine bessere Kraftübertragung von auf die Karabinervorrichtung 100 wirkenden Kräften, so dass eine robustere Ausgestaltung der Karabinervorrichtung 100 bereitgestellt ist.

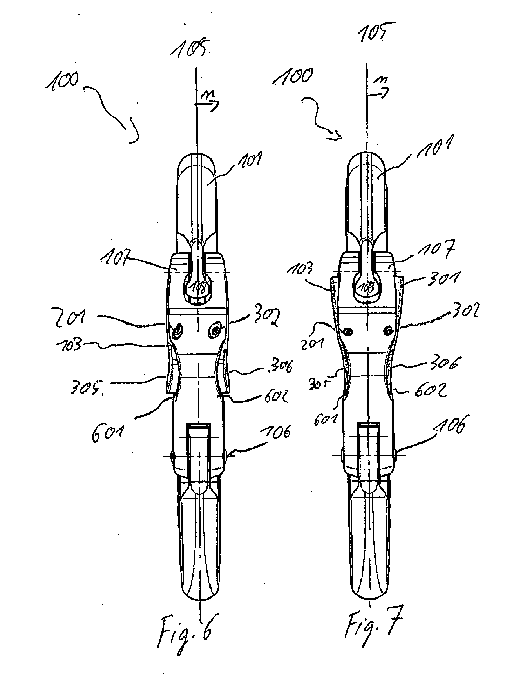

Fig. 6 und Fig. 7 zeigen beispielhafte Seitendarstellungen der Karabinervorrichtung 100. Fig. 6 zeigt den Sicherungshebel 103 und den weiteren Sicherungshebel 301 in einer mit dem gebogenen Profilelement 101 gekoppelten Position, während Fig. 7 den Sicherungshebel 103 und den weiteren Sicherungshebel 301 in einer von dem gebogenen Profilelement 101 entkoppelten Stellung zeigt.

Fig. 6 und Fig. 7 zeigen ferner den Teilbereich 108 des gebogenen Profilelements 101, welcher in dem Führungsprofil 107 des Schwenkarms 102 geführt ist. Der Sicherungshebel 103 ist um die zweite Drehachse 201 schwenkbar, während der weitere Sicherungshebel 301 um die weitere zweite Drehachse 302 schwenkbar ist. Die zweite Drehachse 201 und die weitere zweite Drehachse 302 sind windschief zu der ersten Drehachse 106 und parallel verlaufend zu der Profilebene 105 ausgerichtet. An einem Endbereich der Sicherungshebel 103, 301 sind die Sicherungshaken 303, 304 ausgebildet, welche mit dem Teilbereich 108 des gebogenen Profilelements koppelbar sind. An den entgegengesetzten Endbereichen der Sicherungshebel 103, 301 ist jeweils die Betätigungsfläche 304 bzw. die weitere Betätigungsfläche 306 ausgebildet. Im Bereich dieser Betätigungsflächen 305, 306 sind an dem Schwenkarm 102 jeweils eine Aussparung 601 und eine weitere Aussparung 602 ausgebildet. Die Aussparungen 601, 602 dienen dazu, dass die Betätigungsflächen 305, 306 weiter mit einem Finger in die Mitte des gebogenen Profilelements 101 hineingedrückt werden können. Damit kann sichergestellt werden, dass ausschließlich eine eindeutig starke und gezielt ausgeübte Betätigungskraft die Sicherungshebel 103, 301 soweit um die jeweiligen zweiten Drehachsen 201, 302 dreht, dass die Sicherungshebel 103, 301 von dem gebogenen Profilelement 101 entkoppelt werden. Somit kann die Sicherheit der Karabinervorrichtung 100 erhöht werden.

In Fig. 6 sind die Sicherungshebel 103, 301 mit dem gebogenen Profilelement 101 gekoppelt, so dass die Betätigungsflächen 305, 306 von der Mittellinie bzw. von der Profilebene 105 entfernt dargestellt sind.

In Fig. 7 werden die Sicherungshebel 103, 301 in einer entkoppelten Stellung dargestellt. Aufgrund der Betätigungskraft sind die Betätigungsflächen 305, 306 in Richtung Profilebene 105 hineingedrückt worden. In dieser entkoppelten Stellung kann eine weitere Betätigungskraft aufgebracht werden, welche den Schwenkarm 102 in Richtung Innenbereich 104 der Karabinervorrichtung 100 schwenkt. Falls die Sicherungshebel 103, 301 unabhängig voneinander angeordnet sind, kann eine ungewollte Betätigungskraft (z.B. aufgrund eines vorbeirutschenden Seiles) auf einen der Sicherungshebel 103; 301 aufgebracht werden, während der andere Sicherungshebel 301; 103 mit dem gebogenen Profilelement 101 gekoppelt bleibt. Damit kann ein ungewolltes Öffnen der Karabinervorrichtung verhindert werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen

### Bezugszeichenliste:

- 100: Karabinervorrichtung
- 101: gebogenes Profilelement
- 102: Schwenkarm
- 103: Sicherungshebel
- 104: Innenbereich
- 105: Profilebene
- 106: erste Drehachse
- 107: Führungsprofil
- 108: Teilbereich des gebogenen Profilelements

- 201: zweite Drehachse

- 301: weiterer Sicherungshebel
- 302: weitere zweite Drehachse
- 303: Sicherungshaken
- 304: weiterer Sicherungshaken
- 305: Betätigungsfläche
- 306: weitere Betätigungsfläche
- 307: Federelement
- 308: weiteres Federelement

- 401: Sicherungsnut

- 601: Aussparung
- 602: weitere Aussparung

- n: Normalenvektor

## Patentansprüche

1. Karabinervorrichtung (100), aufweisend
ein gebogenes Profilelement (101), und
einen um eine erste Drehachse (106) schwenkbaren Schwenkarm (102) mit einem um eine zweite Drehachse (201) schwenkbar an dem Schwenkarm (102) angeordneten Sicherungshebel (103),
wobei der Schwenkarm (102) an dem gebogenen Profilelement (101) derart schwenkbar angeordnet ist, dass der Schwenkarm (102) in eine Schließstellung zum Bereitstellen eines geschlossenen Profils der Karabinervorrichtung (100) und in eine Öffnungsstellung zum Bereitstellen eines offenen Profils der Karabinervorrichtung (100) schwenkbar ist,
wobei der Sicherungshebel (103) einen Sicherungsbereich aufweist, mit dem er in der Schließstellung mit dem gebogenen Profilelement (101) verhakbar ist, und wobei der Sicherungshebel (103) derart eingerichtet ist, dass aufgrund einer auf den Sicherungshebel (103) ausgeübten Betätigungskraft der Sicherungshebel (103) von dem gebogenen Profilelement (101) lösbar ist und der Schwenkarm (102) in die Öffnungsstellung schwenkbar ist,
ferner aufweisend ein Federelement (307), das mit dem Schwenkarm (102) und dem Sicherungshebel (103) derart gekoppelt ist, dass der Sicherungshebel (103) aufgrund einer Federkraft des Federelements (307) mit dem Sicherungsbereich in Richtung zu dem gebogenen Profilelement (101) bewegt wird, **dadurch gekennzeichnet, dass** die erste und die zweite Drehachse einen Winkel zueinander aufweisen.

2. Karabinervorrichtung (100) nach Anspruch 1, **dadurch gekennzeichnet, dass** die Betätigungskraft eine Druckkraft ist.

3. Karabinervorrichtung (100) nach Anspruch 1 oder 2, **dadurch gekennzeichnet, dass** der Schwenkarm (102) zum Schwenken von der Schließstellung in die Öffnungsstellung in Richtung eines von dem gebogenen Profilelement (101) zumindest teilweise umschlossenen Innenbereichs (104) schwenkbar ist.

4. Karabinervorrichtung (100) nach einem der Ansprüche 1 bis 3, **dadurch gekennzeichnet, dass** das gebogene Profilelement (101) eine Profilmittellinie aufweist, welche in einer Profilebene (105) verläuft, wobei die erste Drehachse (106) parallel zu einem Normalenvektor (n) der Profilebene (105) ausgebildet ist.

5. Karabinervorrichtung (100) nach einem der Ansprüche 1 bis 4, **dadurch gekennzeichnet, dass** der Schwenkarm (102) ein freies Ende mit einem Führungsprofil (107) aufweist, und das Führungsprofil (107) derart ausgebildet ist, dass in der Schließstellung das Führungsprofil (107) mit einem Teilbereich (108) des gebogenen Profilelements (101) im Eingriff steht.

6. Karabinervorrichtung (100) nach Anspruch 5, **dadurch gekennzeichnet, dass** das Führungsprofil (107) ein U-Profil mit einer offenen Profilseite aufweist, und die offene Profilseite derart angeordnet ist, dass während des Schwenkens des Schwenkarms (102) in die Schließstellung der Teil des gebogenen Profilelements (101) über die offene Profilseite in das U-Profil einschwenkbar ist.

7. Karabinervorrichtung (100) nach einem der Ansprüche 1 bis 6,
wobei der Sicherungshebel (103) einen Sicherungshaken (303) aufweist, wobei das gebogene Profilelement (101) eine Sicherungsnut (401) aufweist, und
wobei der Sicherungshaken (303) und die Sicherungsnut (401) derart zueinander ausgerichtet sind, dass in der Sicherungsstellung der Sicherungshaken (303) zum Verhindern eines weiteren Schwenkens des Schwenkarms (102) in die Sicherungsnut (401) eingreift.

8. Karabinervorrichtung (100) nach einem der Ansprüche 1 bis 7, **dadurch gekennzeichnet, dass** der Schwenkarm (102) einen schwenkbar an dem Schwenkarm (102) angeordneten weiteren Sicherungshebel (301) aufweist, wobei der weitere Sicherungshebel (301) derart eingerichtet ist, dass der weitere Sicherungshebel (301) in der Schließstellung mit dem gebogenen Profilelement (101) koppelbar ist, und der weitere Sicherungshebel (301) derart eingerichtet ist, dass aufgrund einer auf den weiteren Sicherungshebel (301) ausgeübten Betätigungskraft der weitere Sicherungshebel (301) von dem gebogenen Profilelement (101) lösbar ist.

9. Karabinervorrichtung (100) nach Anspruch 8, **dadurch gekennzeichnet, dass** der weitere Sicherungshebel (301) unabhängig von dem Sicherungshebel (103) betätigbar ist.

10. Verfahren zum Betätigen einer Karabinervorrichtung (100) mit einem gebogenen Profilelement (101) und mit einem an dem gebogenen Profilelement (101) schwenkbar angebrachten Schwenkarm (102), wobei das Verfahren aufweist:
Schwenken des Schwenkarms (102) um eine erste Drehachse (106) in eine Schließstellung zum Bereitstellen eines geschlossenen Profils der Karabinervorrichtung (100) und in eine Öffnungsstellung zum Bereitstellen eines offenen Profils der Karabinervorrichtung (100);
Verhaken eines an dem Schwenkarm (102) schwenkbar angeordneten, einen Sicherungsbereich aufweisenden Sicherungshebels (103) mit dem gebogenen Profilelement (101) in der Schließstellung, wobei ein Federelement (307) mit dem Schwenkarm (102) und dem Sicherungshebel (103) derart gekoppelt ist, dass der Sicherungshebel (103) aufgrund einer Federkraft des Federelements (307) mit dem Sicherungsbereich in Richtung zu dem gebogenen Profilelement (101) bewegt wird; und
Schwenken des Sicherungshebels (103) um eine zweite Drehachse (201), die einen Winkel zu der ersten Drehachse (106) aufweist, mittels Ausübens einer Betätigungskraft auf den Sicherungshebel (103) derart, dass sich der Sicherungshebel (103) von dem gebogenen Profilelement (101) löst und der Schwenkarm (102) in die Öffnungsstellung schwenkbar ist.

## Claims

1. Carabiner device (100), having a curved profile member (101) and a pivoting arm (102), pivotable on a first axis of rotation (106), which has a securing lever (103) arranged to be pivotable on the pivoting arm (102) on a second axis of rotation (201), the pivoting arm (102) being arranged to be pivotable on the curved profile member (101) in such a way that the pivoting arm (102) is pivotable to a closed position to produce a fully enclosed profile for the carabiner device (100) and to an ope n position to produce an open profile for the carabiner device (100), the securing lever (103) having a securing region by which it can be hooked to the curved profile member (101) in the closed position, and the securing lever (103) being so adapted that, as a result of an actuating force exerted on said securing lever (103), said securing lever (103) is releasable from the curved profile member (101) and the pivoting arm (102) is pivotable to the open position, and also having a spring member (307) which is coupled to the pivoting arm (102) and the securing lever (103) in such a way that, as a result of a resilient force from the spring member (307), the securing region of the securing lever (103) is moved in the direction of the curved profile member (101), **characterised in that** the first and second axes of rotation are at an angle to one another.

2. Carabiner device (100) according to claim 1, **characterised in that** the actuating force is a compressive force.

3. Carabiner device (100) according to claim 1 or 2, **characterised in that**, to pivot from the closed position to the open position, the pivoting arm (102) is pivotable in the direction of an interior region (104) which is at least partly enclosed by the curved profile member (101).

4. Carabiner device (100) according to one of claims 1 to 3, **characterised in that** the profile of the curved profile member (101) has a centre line which extends on a plane (105) through the profile, the first axis of rotation (106) being of a form parallel to a vector (n) normal to the plane (105) through the profile.

5. Carabiner device (100) according to one of claims 1 to 4, **characterised in that** the pivoting arm (102) has a free end having a guiding profile (107), and the guiding profile (107) is so formed that said guiding profile (107) is in engagement with a sub-region (108) of the curved profile member (101) in the closed position.

6. Carabiner device (100) according to claim 5, **characterised in that** the guiding profile (107) has a U-profile which is open on one side, and the open side of the profile is so arranged that, during the pivoting of the pivoting arm (102) to the closed position, the sub-region of the curved profile member (101) can be pivoted into the U-profile through the open side of the profile.

7. Carabiner device (100) according to one of claims 1 to 6, wherein the securing lever (103) has a securing hook (303), wherein the curved profile member (101) has a securing groove (401), and wherein the securing hook (303) and the securing groove (401) are so orientated relative to one another that, in the securing position, the securing hook (303) engages in the securing groove (401) to prevent the pivoting arm (102) from pivoting any further.

8. Carabiner device (100) according to one of claims 1 to 7, **characterised in that** the pivoting arm (102) has a further securing lever (301) arranged to be pivotable on said pivoting arm (102), the further securing lever (301) being so adapted that said further securing lever (301) can be coupled to the curved profile member (101) in the closed position, and said further securing lever (301) is so adapted that, as a result of an actuating force exerted on said further securing lever (301), said further securing lever (301) can be released from the curved profile member (101).

9. Carabiner device (100) according to claim 8, **characterised in that** the further securing lever (301) is actuatable independently of the securing lever (103).

10. Method of actuating a carabiner device (100) having a curved profile member (101) and having a pivoting arm (102) mounted to be pivotable on the curved profile member (101), the method comprising:
pivoting the pivoting arm (102) on a first axis of rotation (106) to a closed position to produce a fully enclosed profile for the carabiner device (100) and to an open position to produce an open profile for the carabiner device (100),
hooking a securing lever (103), which is arranged to be pivotable on the pivoting arm (102) and which has a securing region, to the curved profile member (101) in the closed position, a spring member (307) being coupled to the pivoting arm (102) and the securing lever (103) in such a way that, as a result of a resilient force from the spring member (307), the securing region of the securing lever (103) is moved in the direction of the curved profile member (101), and,
pivoting of the securing lever (103) on a second axis of rotation (201) which is at an angle to the first axis of rotation (106), by the exertion of an actuating force on the securing lever (103) in such a way that said securing lever (103) releases from the curved profile member (101) and the pivoting arm (102) is pivotable to the open position.

## Revendications

1. Dispositif à mousqueton (100), comprenant
un élément profilé cintré (101), et
un bras pivotant (102) capable de pivoter autour d'un premier axe de rotation (106), avec un levier de sécurité (103) agencé sur le bras pivotant (102) et capable de pivoter autour d'un second axe de rotation (201),
dans lequel le bras pivotant (102) est agencé sur l'élément profilé cintré (101) et capable de pivoter de telle façon que le bras pivotant (102) est capable de pivoter jusque dans une position fermée pour présenter un profil fermé du dispositif à mousqueton (100) et jusque dans une position ouverte pour présenter un profil ouvert du dispositif à mousqueton (100),
dans lequel le levier de sécurité (103) comporte une zone de sécurité avec laquelle il est susceptible d'être accroché avec l'élément profilé cintré (101) dans la position fermée, et dans lequel le levier de sécurité (103) est disposé de telle façon qu'en raison d'une force d'actionnement exercée sur le levier de sécurité (103), le levier de sécurité (103) peut être détaché de l'élément profilé cintré (101) et le bras pivotant (102) est capable de pivoter jusque dans la position ouverte, comprenant en outre un élément à ressort (307), qui est accouplé avec le bras pivotant (102) et avec le levier de sécurité (103) de telle façon que le levier de sécurité (103) est déplacé, en raison d'une force élastique de l'élément à ressort (307), avec la zone de sécurité en direction de l'élément profilé cintré (101), **caractérisé en ce que** le premier axe de rotation et le second axe de rotation présentent un angle l'un par rapport à l'autre.

2. Dispositif à mousqueton (100) selon la revendication 1, **caractérisé en ce que** la force d'actionnement est une force de pression.

3. Dispositif à mousqueton (100) selon la revendication 1 ou 2, **caractérisé en ce que** le bras pivotant (102), pour pivoter depuis la position fermée jusque dans la position ouverte, est capable de pivoter en direction d'une région intérieure (107) au moins partiellement enfermée par l'élément profilé cintré (101).

4. Dispositif à mousqueton (100) selon l'une des revendications 1 à 3, **caractérisé en ce que** l'élément profilé cintré (101) présente une ligne médiane de profilé, qui s'étend dans un plan de profilé (105), de sorte que le premier axe de rotation (106) est réalisé parallèle à un vecteur normal (n) du plan de profilé (105).

5. Dispositif à mousqueton (100) selon l'une des revendications 1 à 4, **caractérisé en ce que** le bras pivotant (102) comporte une première extrémité avec un profil de guidage (107), et le profil de guidage (107) est réalisé de telle façon que, dans la position fermée, le profil de guidage (107) est en engagement avec une zone partielle (108) de l'élément profilé cintré (101).

6. Dispositif à mousqueton (100) selon la revendication 5, **caractérisé en ce que** le profil de guidage (107) comprend un profil en U avec un côté de profil ouvert, et le côté de profil ouvert est agencé de telle façon que, pendant le pivotement du bras pivotant (102) jusque dans la position fermée, la partie de l'élément profilé cintré (101) est capable de pivoter en entrant dans le profil en U via le côté de profil ouvert.

7. Dispositif à mousqueton (100) selon l'une des revendications 1 à 6,
dans lequel le levier de sécurité (103) comprend un crochet de sécurité (303), et l'élément profilé cintré (101) comprend une gorge de sécurité (401), et
dans lequel le crochet de sécurité (303) et la gorge de sécurité (401) sont orientés l'un vers l'autre de telle façon que, dans la position de sécurité, le crochet de sécurité (303) s'engage dans la gorge de sécurité (401) pour empêcher une poursuite du pivotement du bras pivotant (101).

8. Dispositif à mousqueton (100) selon l'une des revendications 1 à 7, **caractérisé en ce que** le bras pivotant (102) comprend un autre levier de sécurité (301) agencé sur le bras pivotant (102) et capable de pivoter, ledit autre levier de sécurité (301) étant disposé de telle façon que l'autre levier de sécurité (301) est, dans la position fermée, susceptible d'être accouplé avec l'élément profilé cintré (101), et l'autre levier de sécurité (301) est disposé de telle façon qu'en raison d'une force d'actionnement exercée sur l'autre levier de sécurité (301), l'autre levier de sécurité (301) est détachable de l'élément profilé cintré (101).

9. Dispositif à mousqueton (100) selon la revendication 8, **caractérisé en ce que** l'autre levier de sécurité (301) peut être actionné indépendamment du levier de sécurité (103).

10. Procédé pour actionner un dispositif à mousqueton (100) avec un élément profilé cintré (101) et avec un bras pivotant (102) monté capable de pivoter sur l'élément profilé cintré (101), dans lequel le procédé comprend les étapes consistant à :
faire pivoter le bras pivotant (102) autour d'un premier axe de rotation (106) jusque dans une position fermée pour présenter un profil fermé du dispositif à mousqueton (100), et jusque dans une position ouverte pour présenter un profil ouvert du dispositif à mousqueton (100) ;
accrocher un levier de sécurité (103) qui est agencé en pivotement sur le bras pivotant (102) et qui présente une zone de sécurité, avec l'élément profilé cintré (101) dans la position fermée, dans lequel un élément à ressort (307) est accouplé avec le bras pivotant (102) et avec le levier de sécurité (103) de telle manière que le levier de sécurité (103) est déplacé, en raison d'une force élastique de l'élément à ressort (307), avec la zone de sécurité en direction de l'élément profilé cintré (101) ; et
faire pivoter le levier de sécurité (103) autour d'un second axe de rotation (201), qui présente un angle par rapport au premier axe de rotation (106), en exerçant une force d'actionnement sur le levier de sécurité (103), de telle manière que le levier de sécurité (103) se détache de l'élément profilé cintré (101), et que le bras pivotant (102) est capable de pivoter jusque dans la position ouverte.
